# EUROPÄISCHE PATENTSCHRIFT

(11) **EP 2 555 978 B1**
(45) Veröffentlichungstag und Bekanntmachung des Hinweises auf die Patenterteilung: **04.11.2015**
(21) Anmeldenummer: 11714693.6
(22) Anmeldetag: 05.04.2011
(51) Int. Cl.: B64D 13/06, B64D 13/08

(54) **KOMPRESSOR/TURBINEN-ANORDNUNG, KLIMAAGGREGAT UND VERFAHREN ZUM BETREIBEN EINER KOMPRESSOR/TURBINEN-ANORDNUNG**
COMPRESSOR/TURBINE ARRANGEMENT, AIR CONDITIONING UNIT AND METHOD FOR OPERATING A COMPRESSOR/TURBINE ARRANGEMENT
AGENCEMENT DE COMPRESSEUR/TURBINE, GROUPE DE CLIMATISATION ET PROCÉDÉ POUR UTILISER UN AGENCEMENT DE COMPRESSEUR/TURBINE

(30) Priorität: 06.04.2010 US 321156 P; 06.04.2010 DE 102010013956
(43) Veröffentlichungstag der Anmeldung: 13.02.2013
(73) Patentinhaber: Airbus Operations GmbH, 21129 Hamburg (DE)
(72) Erfinder: KELNHOFER, Juergen, 21635 Jork (DE)
(74) Vertreter: Schicker, Silvia
(86) Internationale Anmeldenummer: PCT/EP2011/001688
(87) Internationale Veröffentlichungsnummer: WO 2011/124361

(56) Entgegenhaltungen:
- EP-A2- 1 112 930
- WO-A1-98/27389
- GB-A- 686 549
- US-A- 5 309 724

## Beschreibung

Die Erfindung betrifft eine zum Einsatz in einem Klimaaggregat einer Flugzeugklimaanlage vorgesehene Kompressor/Turbinen-Anordnung, ein Klimaaggregat für eine Flugzeugklimaanlage sowie ein Verfahren zum Betreiben einer zum Einsatz in einem Klimaaggregat einer Flugzeugklimaanlage vorgesehenen Kompressor/Turbinen-Anordnung.

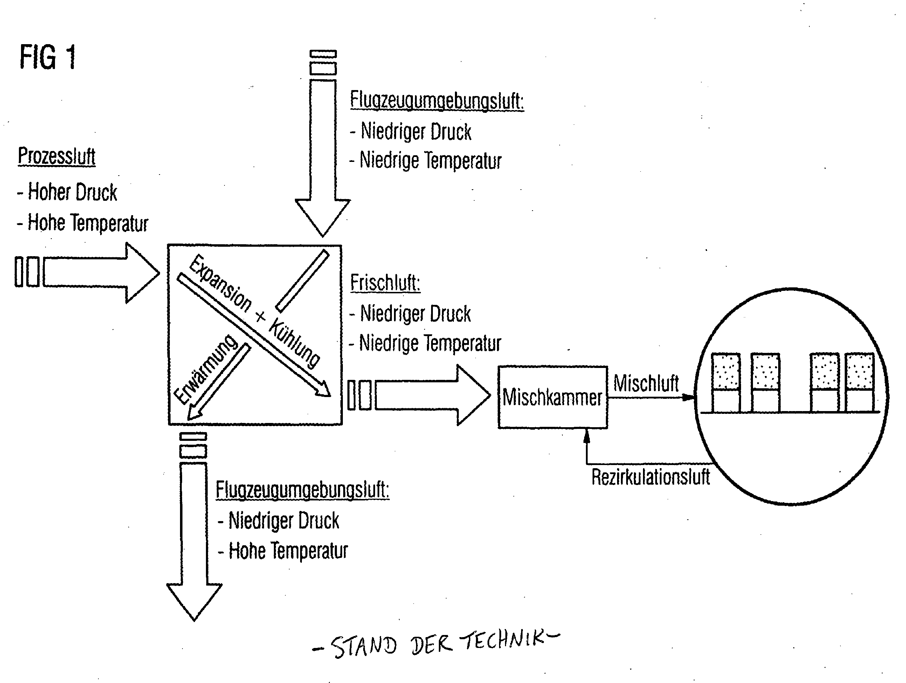

In Verkehrsflugzeugen werden derzeit zur Klimatisierung der Flugzeugkabine üblicherweise sogenannte luftgestützte Klimaanlagen eingesetzt. Eine Flugzeugklimaanlage dient der Kühlung der Flugzeugkabine, die sonst durch Wärmelasten, wie z.B. Sonneneinstrahlung, Körperwärme der Passagiere und Abwärme von an Bord des Flugzeugs vorhandenen Geräten zu stark erwärmt würde. Darüber hinaus führt die Flugzeugklimaanlage ausreichend Frischluft in die Flugzeugkabine zu, um sicherzustellen, dass in der Flugzeugkabine ein vorgeschriebener Mindestanteil von Sauerstoff vorhanden ist. Das Funktionsprinzip einer derzeit gängigen luftgestützten Flugzeugklimaanlage ist in Fig. 1 veranschaulicht.

Bei der in Figur 1 gezeigten Flugzeugklimaanlage wird heiße Prozessluft, die im Flugbetrieb des Flugzeugs entweder von den Flugzeugtriebwerken abgezapft oder durch separat von den Triebwerken ausgebildete Verdichter erzeugt wird, einem Klimaaggregat zugeführt. In dem Klimaaggregat wird die mit einer hohen Temperatur und einem hohen Druck zugeführte Prozessluft beim Durchströmen einer Wärmetauschereinheit sowie einer Verdichtungs- und Expansionseinheit derart aufbereitet, dass sie die Verdichtungs- und Expansionseinheit als entspannte und gekühlte Prozessluft verlässt. Die entspannte und gekühlte Prozessluft wird als Frischluft einer Mischkammer zugeführt, wo sie mit aus der Flugzeugkabine abgeführter Rezirkulationsluft vermischt wird. Die in der Mischkammer erzeugte Luftmischung aus Frischluft und Rezirkulationsluft wird schließlich in die Flugzeugkabine geleitet.

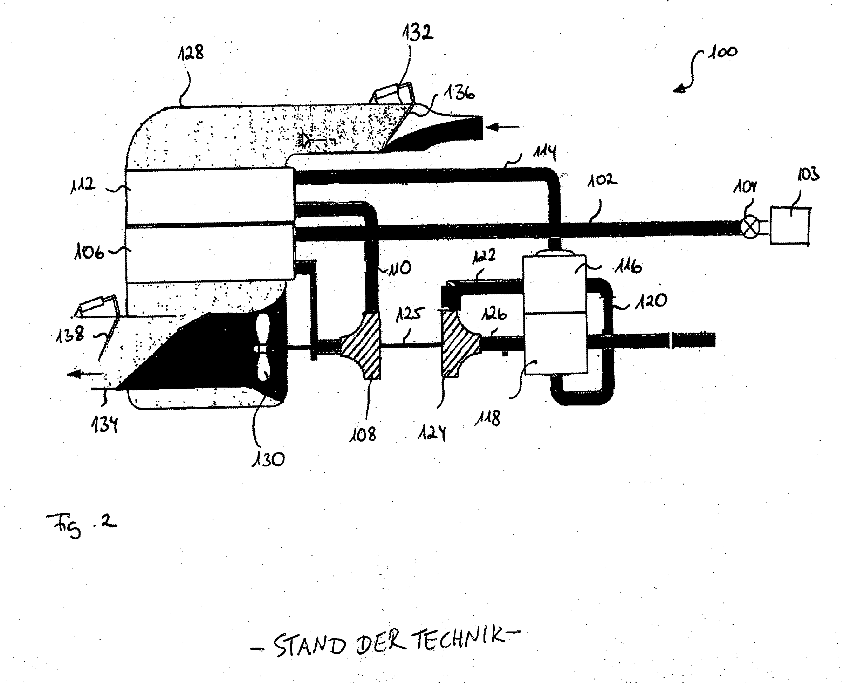

Der Aufbau eines derzeit gängigen Klimaaggregats 100 ist Figur 2 zu entnehmen. Das Klimaaggregat 100 umfasst eine Prozessluftzufuhrleitung 102, über die dem Klimaaggregat 100 von einer in Form eines Flugzeugtriebwerks oder eines separaten Verdichters ausgebildeten Prozessluftquelle 103 erzeugte heiße Prozessluft mit einem hohen Druck zugeführt wird. Zur Steuerung der Prozessluftströmung durch die Prozessluftzufuhrleitung 102 ist in der Prozessluftzufuhrleitung 102 ein Steuerventil 104 angeordnet. Die die Prozessluftzufuhrleitung 102 durchströmende Luft wird durch einen ersten Wärmetauscher 106 geleitet, dabei auf ca. 40°C bis 100°C gekühlt und anschließend einem Kompressor 108 zugeführt. In dem Kompressor 108 wird die Prozessluft verdichtet und dabei erwärmt. Um Beschädigungen des Kompressors 108 und/oder stromabwärts des Kompressors 108 angeordneter Komponenten des Klimaaggregat 100 zu vermeiden, muss die Erwärmung der Luft beim Durchströmen des Kompressors 108 jedoch auf Temperaturen von ca. 220°C bis 260°C begrenzt werden. Die Abkühlung der dem Kompressor 108 zuzuführenden Prozessluft mittels des ersten Wärmetauschers 106 ermöglicht daher eine höhere Verdichtung der Prozessluft im Kompressor 108 und folglich die Realisierung einer höheren Kühlleistung des Klimaaggregats 100.

Von dem Kompressor 108 wird die verdichtete Prozessluft über eine Leitung 110 einem zweiten Wärmetauscher 112 zugeführt, beim Durchströmen des zweiten Wärmetauschers 112 gekühlt und anschließend über eine Leitung 114 zur weiteren Abkühlung einem dritten sowie einem vierten Wärmetauscher 116, 118 zugeleitet. Aus dem vierten Wärmetauscher 118 austretende Prozessluft wird über eine Leitung 120 zu dem dritten Wärmetauscher 116 zurückgeführt und beim erneuten Durchströmen des dritten Wärmetauschers 116 durch Wärmeübertragung von der über die Leitung 114 aus dem zweiten Wärmetauscher 112 in den dritten Wärmetauscher 116 geleiteten Luft erwärmt. Die erwärmte Prozessluft wird über eine Leitung 122 einer Turbine 124 zugeführt. In der Turbine 124 wird die Luft entspannt und dabei erneut abgekühlt. Der Kompressor 108 ist mit der Turbine 124 auf einer gemeinsamen Welle 125 angeordnet und wird durch die Turbine 124 angetrieben. Die aus der Turbine 124 austretende Prozessluft wird schließlich über eine Leitung 126 nochmals dem vierten Wärmetauscher 118 zugeführt. Beim erneuten Durchströmen des vierten Wärmetauschers 118 wird die aus der Turbine 124 austretende Prozessluft durch Wärmeübertragung von der über die Leitung 114 aus dem zweiten Wärmetauscher 112 in den dritten und anschließend den vierten Wärmetauscher 116, 118 geleiteten Luft nochmals erwärmt.

Der erste und der zweite Wärmetauscher 106, 112 sind jeweils in einen Stauluftkanal 128 angeordnet, der im Flugbetrieb des Flugzeugs von kalter Umgebungsluft durchströmt wird. Im Bodenbetrieb des Flugzeugs dient dagegen ein Gebläse 130 dazu, Umgebungsluft zur Kühlung des erstes und des zweite Wärmetauschers 106, 112 durch den Stauluftkanal 128 zu fördern. Sowohl im Flugbetrieb als auch im Bodenbetrieb des Flugzeugs wird die Umgebungsluftströmung durch den Stauluftkanal 128 durch entsprechende Positionierung von in einem Einlassbereich 132 sowie einem Auslassbereich 134 des Stauluftkanals 128 angeordneten Klappen 136, 138 gesteuert. Das Gebläse 130 ist mit dem Kompressor 108 und der Turbine 124 auf der gemeinsamen Welle 125 angeordnet, so dass durch die Turbine 124 nicht nur der Kompressor 108, sondern auch das Gebläse 130 angetrieben wird. Eine die Turbine 124, den Kompressor 108 und das Gebläse 130 umfassende Baugruppe wird üblicherweise als Air Cycle Machine (ACM) bezeichnet, wobei eine ACM, je nach Bedarf, auch mehrere Turbinen, mehrere Kompressoren und/oder mehrere Gebläse umfassen kann.

Im Betrieb des aus dem Stand der Technik bekannten Klimaaggregats können Betriebssituationen auftreten, in denen die Temperatur der dem Kompressor zuzuführenden Prozessluft, bedingt durch den Betriebszustand der Prozessluftquelle, beispielsweise beim Start des Flugzeugs oder in einem Fehlerfall, oder durch einen Fehlbetrieb des ersten Wärmetauschers ansteigt. Um in derartigen Betriebssituationen eine Beschädigung der Komponenten des Klimaaggregats und insbesondere des Kompressors durch zu hohe Prozesslufttemperaturen zu verhindern, muss die Kühlleistung des Klimaaggregats verringert oder das Klimaaggregat sogar ganz abgeschaltet werden. Dies hat jedoch erhebliche Komforteinbußen für die Passagiere und die Crew an Bord des Flugzeugs zur Folge und kann im Extremfall sogar einen Abbruch des Flugs erforderlich machen.

Druckschriften GB 686549, die den nächstliegenden Stand der Technik darstellt, sowie EP 1 555 205 und DE 199 63 280 zeigen Klimaanlagen, in denen in die Prozessluftzufuhrleitung eine Kühlvorrichtung zwischengeschaltet ist, so dass die die Prozessluftzufuhrleitung im Bereich eines mit der Prozessluftquelle verbundenen Endes durchströmende Prozessluft eine höhere Temperatur aufweist als die die Prozessluftzuführleitung im Bereich eines mit dem Kompressor verbundenen Endes durchströmende Prozessluft.

Der Erfindung liegt die Aufgabe zugrunde, eine zum Einsatz in einem Klimaaggregat einer Flugzeugklimaanlage vorgesehene Kompressor/Turbinen-Anordnung anzugeben, die im Fall einer Erhöhung der Temperatur der einem Kompressor zugeführten Prozessluft einen Weiterbetrieb des Klimaaggregats mit ausreichender Kühlleistung ermöglicht. Ferner liegt der Erfindung die Aufgabe zugrunde, ein mit einer derartigen Kompressor/Turbinen-Anordnung ausgestattetes Klimaaggregat für eine Flugzeugklimaanlage sowie ein Verfahren zum Betreiben einer derartigen Kompressor/Turbinen-Anordnung bereitzustellen.

Diese Aufgabe wird durch eine Kompressor/Turbinen-Anordnung mit den Merkmalen des Anspruchs 1, ein Klimaaggregat für eine Flugzeugklimaanlage mit den Merkmalen des Anspruchs 6 sowie ein Verfahren zum Betreiben einer Kompressor/Turbinen-Anordnung mit den Merkmalen des Anspruchs 8 gelöst.

Eine erfindungsgemäße Kompressor/Turbinen-Anordnung, die zum Einsatz in einem Klimaaggregat einer Flugzeugklimaanlage geeignet ist, umfasst eine Prozessluftzufuhrleitung, die dazu eingerichtet ist, einem Kompressor von einer Prozesslüftquelle erzeugte Prozessluft zuzuführen. Als Prozessluftquelle kann ein Triebwerk des Flugzeugs, aber auch ein separat ausgebildeter Verdichter dienen. Ferner umfasst die Kompressor/Turbinen-Anordnung eine Erfassungseinrichtung, die dazu eingerichtet ist, ein für die Temperatur der die Prozessluftzufuhrleitung durchströmenden Prozessluft charakteristisches Signal zu erfassen. Die Erfassungseinrichtung kann beispielsweise in Form eines Temperatursensors ausgebildet sein. Alternativ oder zusätzlich dazu kann jedoch auch eine Erfassungseinrichtung zum Einsatz kommen, die geeignet ist, den Druck der die Prozessluftzufuhrleitung durchströmenden Prozessluft zu erfassen, da auch der Druck der die Prozessluftzufuhrleitung durchströmenden Prozessluft zumindest dann Rückschlüsse auf die Temperatur der Prozessluft erlaubt, wenn entsprechende Betriebsparameter der Prozessluftquelle bekannt sind. Falls gewünscht, können, beispielsweise aus Redundanzgründen, auch mehrere Erfassungseinrichtungen vorhanden sein.

Die erfindungsgemäße Kompressor/Turbinen-Anordnung umfasst ferner eine Turbine, die dazu eingerichtet ist, den Kompressor anzutreiben. Die Turbine kann mit dem Kompressor beispielsweise auf einer gemeinsamen Welle angeordnet sein. Ferner ist eine Kühleinrichtung vorgesehen, die in einer den Kompressor mit der Turbine verbindenden Prozessluftleitung angeordnet und dazu eingerichtet ist, die aus dem Kompressor austretende und die Prozessluftleitung in Richtung der Turbine durchströmende Prozessluft zu kühlen. Vorzugsweise umfasst die Kühleinrichtung mindestens einen Wärmetauscher, wobei es sich bei dem Wärmetauscher um einen Wärmetauscher handeln kann, der in einem Stauluftkanal des Klimaaggregats angeordnet ist und zur Kühlung der die Prozessluftleitung durchströmenden Prozessluft von kalter Umgebungsluft durchströmt wird. Alternativ dazu kann der in der Prozessluftleitung angeordnete Wärmetauscher jedoch auch ein Wärmetauscher des Klimaaggregats sein, der zur Kühlung der die Prozessluftleitung durchströmenden Prozessluft von aus der Turbine der Kompressor/Turbinen-Anordnung austretender entspannter und folglich gekühlter Prozessluft durchströmt wird. Falls gewünscht, kann die Kühleinrichtung auch mehrere, hintereinander in der Prozessluftleitung angeordnete Wärmetauscher umfassen, wobei es sich bei den Wärmetauschern um die oben beschriebenen Wärmetauscher des Klimaaggregats handeln kann.

Eine Verbindungsleitung der erfindungsgemäßen Kompressor/Turbinen-Anordnung zweigt stromabwärts der Kühleinrichtung von der Prozessluftleitung ab und mündet in die Prozessluftzufuhrleitung. Eine Steuereinrichtung ist dazu eingerichtet, eine Prozessluftströmung durch die Verbindungsleitung in Abhängigkeit des von der Erfassungseinrichtung erfassten, für die Temperatur der die Prozessluftzufuhrleitung durchströmenden Prozessluft charakteristischen Signals zu steuern. Mit anderen Worten, unter der Steuerung der Steuereinrichtung kann bei Bedarf gekühlte Prozessluft, die die Prozessluftleitung stromabwärts der Kühleinrichtung durchströmt, über die Verbindungsleitung in die Prozessluftzufuhrleitung geleitet werden, um die Temperatur der die Prozessluftzufuhrleitung in Richtung des Kompressors durchströmenden Prozessluft zu steuern.

Die erfindungsgemäße Kompressor/Turbinen-Anordnung ermöglicht es, durch entsprechende Steuerung der Prozessluftströmung durch die Verbindungsleitung auf Schwankungen der Temperatur der die Prozessluftzufuhrleitung in Richtung des Kompressors durchströmenden Prozessluft zu reagieren. Insbesondere kann durch die Zufuhr von gekühlter Prozessluft aus der Prozessluftleitung in die Prozessluftzufuhrleitung die Temperatur der die Prozessluftzufuhrleitung in Richtung des Kompressors durchströmenden Prozessluft wirksam gesenkt werden. Der Kompressor der erfindungsgemäßen Kompressor/Turbinen-Anordnung kann somit auch im Fall einer Erhöhung der Temperatur der dem Kompressor der Kompressor/Turbinen-Anordnung zugeführten Prozessluft mit gleichbleibender oder lediglich geringfügig verringerter Verdichtungsleistung betrieben werden. Dadurch kann ein mit der erfindungsgemäßen Kompressor/Turbinen-Anordnung ausgestattetes Klimaaggregat auch bei einer Erhöhung der Temperatur der die Prozessluftzufuhrleitung in Richtung des Kompressors durchströmenden Prozessluft mit ausreichender Kühlleistung weiterbetrieben werden, so dass der Komfort für die sich an Bord des Flugzeugs befindenden Personen sowie eine ungehinderte Weiterführung des Flugs sichergestellt werden kann. Die die Prozessluftzufuhrleitung im Bereich eines mit der Prozessluftquelle verbundenen Endes durchströmende Prozessluft weist im Wesentlichen die gleiche Temperatur auf, wie die die Prozessluftzufuhrleitung im Bereich eines mit dem Kompressor verbundenen Endes durchströmenden Prozessluft. Mit anderen Worten, bei der erfindungsgemäßen Kompressor/Turbinen-Anordnung ist die Prozessluftquelle unmittelbar, d.h. ohne die Zwischenschaltung einer beispielsweise in Form eines Wärmetauschers ausgebildeten Kühlvorrichtung zur Kühlung der die Prozessluftzufuhrleitung durchströmenden Prozessluft mit dem Kompressor der Kompressor/Turbinen-Anordnung verbunden. Auf den in bekannten Systemen (siehe Figur 2) üblicherweise eingesetzten ersten Wärmetauscher kann bei der erfindungsgemäßen Kompressor/Turbinen-Anordnung verzichtet werden. Dadurch kann das Gewicht und die Systemkomplexität der Kompressor/Turbinen-Anordnung in vorteilhafter Weise verringert werden.

Vorzugsweise ist die Steuereinrichtung dazu eingerichtet, die Prozessluftströmung durch die Verbindungsleitung und/oder den Betrieb der Kühleinrichtung in Abhängigkeit des von der Erfassungseinrichtung erfassten, für die Temperatur der die Prozessluftzufuhrleitung durchströmenden Prozessluft charakteristischen Signals derart zu steuern, dass verhindert wird, dass die Temperatur der die Prozessluftzufuhrleitung durchströmenden Prozessluft einen vorgegebenen Maximalwert überschreitet. Der vorgegebene Maximalwert kann beispielsweise ein von der gewünschten Verdichtungsleistung des Kompressors abhängiger zulässiger Temperaturmaximalwert für die Zufuhr der Prozessluft in den Kompressor der Kompressor/Turbinen-Anordnung sein und in einem Temperaturbereich von 180°C bis 220°C liegen. Zur Steuerung der Prozessluftströmung durch die Verbindungsleitung kann die Steuereinrichtung beispielsweise den Volumenstrom der aus der Prozessluftleitung abzweigten gekühlten Prozessluft steuern. Der Betrieb der Kühleinrichtung kann durch die Steuereinrichtung beispielsweise durch geeignete Steuerung einer Kühlmedienzufuhr zu der Kühleinrichtung gesteuert werden. Beispielsweise kann die Steuereinrichtung zur Steuerung einer Strömung von kalter Umgebungsluft durch einen in einem Stauluftkanal angeordneten Wärmetauscher der Kühleinrichtung die Position von Stauluftkanaleinlass- und Stauluftkanalauslassklappen steuern.

Ferner kann die Steuereinrichtung dazu eingerichtet sein, den Betrieb des Kompressors in Abhängigkeit des von der Erfassungseinrichtung erfassten, für die Temperatur der die Prozessluftzufuhrleitung durchströmenden Prozessluft charakteristischen Signals derart zu steuern, dass eine Temperaturerhöhung, die die Prozessluft bei der Verdichtung in dem Kompressor erfährt, einen zulässigen Maximalwert nicht überschreitet. Der zulässige Maximalwert der Temperaturerhöhung ist vorzugsweise so gewählt, dass Beschädigungen des Kompressors sowie stromabwärts des Kompressors angeordneter Komponenten der Kompressor/Turbinen-Anordnung durch zu hohe Prozesslufttemperaturen zuverlässig verhindert werden und liegt beispielsweise in einem Bereich von ca. 220°C bis 260°C. Unter der Steuerung der Steuereinrichtung kann somit die Verdichtungsleistung des Kompressors verringert oder der Kompressor auch ganz abgeschaltet werden, wenn selbst durch eine entsprechende Steuerung der Prozessluftströmung durch die Verbindungsleitung und des Betrieb der Kühleinrichtung keine ausreichende Abkühlung der die Prozessluftzufuhrleitung durchströmenden Prozessluft mehr möglich ist.

Die Steuereinrichtung der erfindungsgemäßen Kompressor/Turbinen-Anordnung ist vorzugsweise dazu eingerichtet, zur Steuerung der Prozessluftströmung durch die Verbindungsleitung ein in der Verbindungsleitung angeordnetes Ventil zu steuern. Das Ventil kann beispielsweise ein elektromagnetisches Ventil mit einem variablen Strömungsquerschnitt sein. Eine Kompressor/Turbinen-Anordnung, die als zusätzliche Komponenten lediglich die Verbindungsleitung sowie das in der Verbindungsleitung angeordnete Ventil umfasst, zeichnet sich durch ein besonders geringes Gewicht sowie eine besonders geringe Komplexität aus.

In einer bevorzugten Ausführungsform der erfindungsgemäßen Kompressor/Turbinen-Anordnung ist ferner ein Gebläse vorhanden, das dazu eingerichtet ist, von der Turbine der Kompressor/Turbinen-Anordnung angetrieben zu werden. Bei dem Gebläse kann es sich beispielsweise um ein in einem Stauluftkanal eines mit der Kompressor/Turbinen-Anordnung ausgestatteten Klimaaggregats angeordnetes Gebläse handeln, das dazu dient, im Bodenbetrieb des Flugzeugs Umgebungsluft durch den Stauluftkanal bzw. einen in dem Stauluftkanal angeordneten Wärmetauscher zu fördern. Das Gebläse ist vorzugsweise mit der Turbine und dem Kompressor der Kompressor/Turbinen-Anordnung auf einer gemeinsamen Welle angeordnet.

Ferner kann die erfindungsgemäße Kompressor/Turbinen-Anordnung eine weitere Turbine umfassen, die dazu eingerichtet ist, den Kompressor und/oder das Gebläse anzutreiben. Die Prozessluftleitung kann den Kompressor entweder mit der Turbine oder der weiteren Turbine verbinden. Wesentlich ist lediglich, dass in der Prozessluftleitung eine beispielsweise in Form eines Wärmetauschers ausgebildete Kühleinrichtung zur Kühlung der die Prozessluftleitung durchströmenden Prozessluft angeordnet ist.

Ein erfindungsgemäßes Klimaaggregat für eine Flugzeugklimaanlage umfasst eine oben beschriebene Kompressor/Turbinen-Anordnung. Vorzugsweise umfasst das Klimaaggregat ferner einen Motor, der dazu eingerichtet ist, den Kompressor und/oder das Gebläse der Kompressor/Turbinen-Anordnung anzutreiben. Der Motor kann beispielsweise in Form eines Elektromotors ausgebildet sein und dient dazu, eine ausreichende Versorgung des Kompressors und/oder des Gebläses mit Antriebsenergie auch dann sicherzustellen, wenn der Druck der dem Kompressor der Kompressor/Turbinen-Anordnung zugeführten Prozessluft nicht ausreichend hoch ist, um den Antrieb des Kompressors und/oder des Gebläses allein durch die Turbine zu ermöglichen. Der Motor kann beispielsweise mit dem Kompressor und der Turbine sowie, falls vorhanden, mit dem Gebläse auf einer gemeinsamen Welle angeordnet sein. Grundsätzlich ist es denkbar, den Motor an verschiedenen Positionen auf der Welle zu positionieren.

Bei einem erfindungsgemäßen Verfahren zum Betreiben einer zum Einsatz in einem Klimaaggregat einer Flugzeugklimaanlage vorgesehenen Kompressor/Turbinen-Anordnung wird einem Kompressor von einer Prozessluftquelle erzeugte Prozessluft durch eine Prozessluftzufuhrleitung zugeführt. Ferner wird ein für die Temperatur der die Prozessluftzufuhrleitung durchströmenden Prozessluft charakteristisches Signal erfasst. Die aus dem Kompressor austretende Prozessluft- wird mittels einer Kühleinrichtung gekühlt, die in einer den Kompressor mit einer Turbine verbindenden Prozessluftleitung angeordnet ist. Die gekühlte Prozessluft wird der Turbine zugeführt, die dazu eingerichtet ist, den Kompressor anzutreiben. Eine Prozessluftströmung durch eine stromabwärts der Kühleinrichtung von der Prozessluftleitung abzweigende und in die Prozessluftzufuhrleitung mündende Verbindungsleitung wird in Abhängigkeit des erfassten, für die Temperatur der die Prozessluftzufuhrleitung durchströmenden Prozessluft charakteristischen Signals gesteuert.

Vorzugsweise weist die die Prozessluftzufuhrleitung im Bereich eines mit der Prozessluftquelle verbundenen Endes durchströmende Prozessluft im Wesentlichen die gleiche Temperatur auf, wie die die Prozessluftzufuhrleitung im Bereich eines mit dem Kompressor verbundenen Endes durchströmende Prozessluft.

Vorzugsweise wird die Prozessluftströmung durch die Verbindungsleitung und/oder der Betrieb der Fühleinrichtung in Abhängigkeit des von der Erfassungseinrichtung erfassten, für die Temperatur der die Prozessluftzufuhrleitung durchströmenden Prozessluft charakteristischen Signals derart gesteuert, dass verhindert wird, dass die Temperatur der die Prozessluftzufuhrleitung durchströmenden Prozessluft einen vorgegebenen Maximalwert überschreitet.

Ferner wird der Betrieb des Kompressors in Abhängigkeit des von der Erfassungseinrichtung erfassten, für die Temperatur der die Prozessluftzufuhrleitung durchströmenden Prozessluft charakteristischen Signals vorzugsweise derart gesteuert, dass eine Temperaturerhöhung, die die Prozessluft bei der Verdichtung in dem Kompressor erfährt, einen zulässigen Maximalwert nicht überschreitet.

Die Prozessluftströmung durch die Verbindungsleitung kann durch die Steuerung eines in der Verbindungsleitung angeordneten Ventils gesteuert werden.

Ferner kann ein Gebläse von der Turbine der Kompressor/Turbinen-Anordnung angetrieben werden.

Schließlich kann eine weitere Turbine den Kompressor und/oder das Gebläse antreiben, wobei die Prozessluftleitung den Kompressor entweder mit der Turbine oder der weiteren Turbine verbindet.

Eine bevorzugte Ausführungsform der Erfindung wird nun anhand der beigefügten schematischen Zeichnungen näher erläutert, von denen
- Figur 1: eine Darstellung des Funktionsprinzips einer bekannten Flugzeugklimaanlage zeigt,
- Figur 2: den Aufbau eines zum Einsatz in einer bekannten Flugzeugklimaanlage geeigneten Klimaaggregats zeigt,
- Figur 3: eine erste Ausführungsform einer zum Einsatz in einem Klimaaggregat einer Flugzeugklimaanlage geeigneten Kompressor/Turbinen-Anordnung zeigt,
- Figur 4: eine zweite Ausführungsform einer zum Einsatz in einem Klimaaggregat einer Flugzeugklimaanlage geeigneten Kompressor/Turbinen-Anordnung zeigt,
- Figur 5: eine dritte Ausführungsform einer zum Einsatz in einem Klimaaggregat einer Flugzeugklimaanlage geeigneten Kompressor/Turbinen-Anordnung zeigt,
- Figur 6: eine vierte Ausführungsform einer zum Einsatz in einem Klimaaggregat einer Flugzeugklimaanlage geeigneten Kompressor/Turbinen-Anordnung zeigt,
- Figur 7: eine fünfte Ausführungsform einer zum Einsatz in einem Klimaaggregat einer Flugzeugklimaanlage geeigneten Kompressor/Turbinen-Anordnung zeigt,
- Figur 8: eine sechste Ausführungsform einer zum Einsatz in einem Klimaaggregat einer Flugzeugklimaanlage geeigneten Kompressor/Turbinen-Anordnung zeigt und
- Figur 9: ein zum Einsatz in einer Flugzeugklimaanlage geeignetes und mit einer Kompressor/Turbinen-Anordnurig gemäß Figur 4 ausgestattetes Klimaaggregat zeigt.

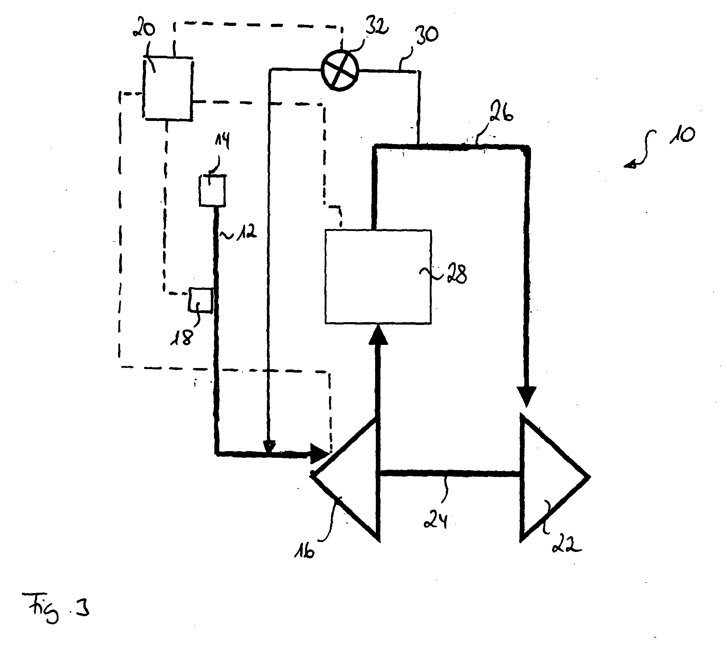

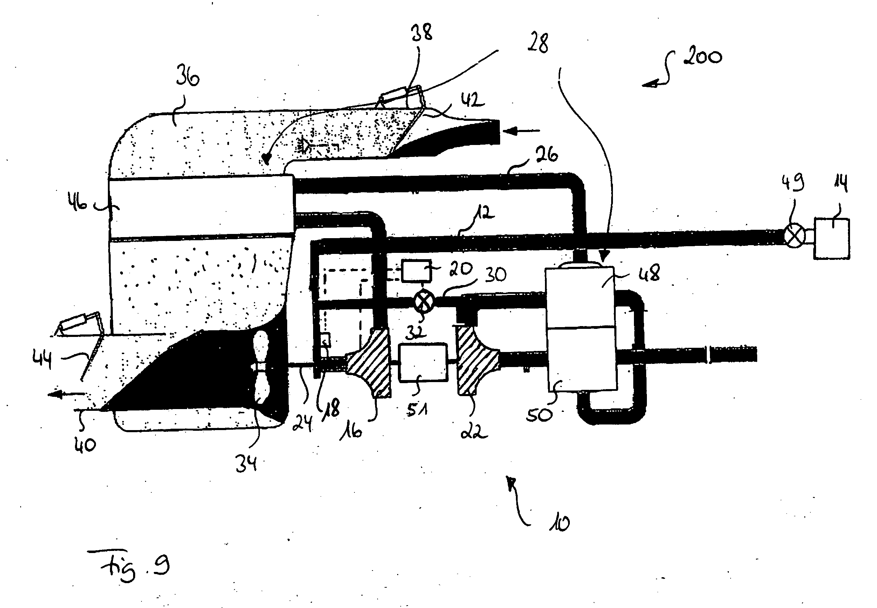

In den Figuren 3 bis 8 sind verschiedene Ausführungsformen einer Kompressor/Turbinen-Anordnung 10 gezeigt, die zum Einsatz in einem in Figur 9 veranschaulichten Klimaaggregat 200 einer Flugzeugklimaanlage geeignet ist. Die in Figur 3 gezeigte Kompressor/Turbinen-Anordnung 10 umfasst eine Prozessluftzufuhrleitung 12, deren erstes Ende mit einer Prozessluftquelle 14 verbunden ist. In den in den Figuren gezeigten-Ausführungsbeispielen der Kompressor/Turbinen-Anordnung 10 wird die Prozessluftquelle 14 durch ein Flugzeugtriebwerk gebildet. Die die Prozessluftzufuhrleitung 12 durchströmende Prozessluft wird dem Flugzeugtriebwerk an einer vergleichsweise niedrigen Verdichterstufe entnommen. Die die Prozessluftzufuhrleitung 12 im Bereich eines mit der Prozessluftquelle 14 verbundenen Endes durchströmende Prozessluft hat daher einen geringeren Druck sowie eine geringere Temperatur als die ein mit der Prozessluftquelle 103 verbundenes Ende der Prozessluftzufuhrleitung 102 der aus dem Stand der Technik bekannten und in Figur 2 veranschaulichten Klimaanlage 100 durchströmende Prozessluft.

Ein zweites Ende der Prozessluftzufuhrleitung 12 ist mit einem Kompressor 16 verbunden. Die Prozessluftzufuhrleitung 12 führt dem Kompressor 16 die von der Prozessluftquelle 14 erzeugte Prozessluft unmittelbar, d.h. ohne die Zwischenschaltung einer Kühlvorrichtung zur Kühlung der Prozessluft zu. In der Kompressor/Turbinen-Anordnung 10 wird somit auf den ersten Wärmetauscher 106 des aus dem Stand der Technik bekannten Klimaaggregats 100 gemäß Figur 2 verzichtet. Die die Prozessluftzufuhrleitung 12 im Bereich ihres mit der Prozessluftquelle 14 verbundenen ersten Endes durchströmende Prozessluft hat folglich im Wesentlichen die gleiche Temperatur, wie die die Prozessluftzufuhrleitung 12 im Bereich ihres mit dem Kompressor 16 verbundenen zweiten Endes durchströmenden Prozessluft.

In der Prozessluftzufuhrleitung 12 ist eine Erfassungseinrichtung 18 angeordnet, die dazu eingerichtet ist, ein für die Temperatur der die Prozessluftzufuhrleitung 12 durchströmenden Prozessluft charakteristisches Signal zu erfassen. In den in den Figuren veranschaulichten Ausführungsbeispielen der Kompressor/Turbinen-Anordnung 10 ist die Erfassungseinrichtung 18 in Form eines Temperatursensors ausgebildet. Die von der Erfassungseinrichtung 18 erfassten Signale werden einer in Form einer elektronischen Steuereinheit ausgebildeten Steuereinrichtung 20 zugeführt.

Die Kompressor/Turbinen-Anordnung 10 umfasst ferner eine Turbine 22, die dazu eingerichtet ist, den Kompressor 16 anzutreiben und mit dem Kompressor 16 auf einer gemeinsamen Welle 24 angeordnet ist. Eine Prozessluftleitung 26 verbindet den Kompressor 16 mit der Turbine 22, so dass aus dem Kompressor 16 austretende verdichtete und erwärmte Prozessluft über die Prozessluftleitung 26 der Turbine 22 zugeleitet werden kann. In der Prozessluftleitung 26 ist eine Kühleinrichtung 28 angeordnet, die dazu dient, die die Prozessluftleitung 26 durchströmende Prozessluft zu kühlen. Beispielsweise kann die Kühleinrichtung 28 mindestens einen Wärmetauscher umfassen. In der Kühleinrichtung 28 erfährt die Prozessluft eine Abkühlung auf eine Temperatur, die unterhalb der Temperatur der der Prozessluftzufuhrleitung im Normalbetrieb der Prozessluftquelle 14 von der Prozessluftquelle 14 zugeführten Prozessluft liegt.

Von der Prozessluftleitung 26 zweigt stromabwärts der Kühleinrichtung 28 eine Verbindungsleitung 30 ab, die stromabwärts des Kompressors 16 in die Prozessluftzufuhrleitung 12 mündet. In der Verbindungsleitung 30 ist ein in Form eines elektromagnetischen Ventils mit einem variablen Strömungsquerschnitt ausgebildetes Ventil 32 zur Steuerung der Prozessluftströmung durch die Verbindungsleitung 30 angeordnet. Der Betrieb des Ventils 32 wird durch die Steuereinrichtung 20 gesteuert.

Im Normalbetrieb der Kompressor/Turbinen-Anordnung 10, d.h. dann, wenn die die Prozessluftzufuhrleitung 12 durchströmende Prozessluft eine unterhalb einer zulässiggen Maximaltemperatur von ca. 180°C bis 220°C liegende Temperatur aufweist, bleibt das Ventil 32 geschlossen, so dass die die Prozessluftleitung 26 stromabwärts der Kühleinrichtung 28 durchströmende Prozessluft ausschließlich der Turbine 22 zugeführt wird. Wenn die Steuereinrichtung 20 dagegen anhand der ihr von der Erfassungseinrichtung 18 übermittelten Signale feststellt, dass die Temperatur der die Prozessluftzufuhrleitung 12 durchströmenden Prozessluft die zulässige Maximaltemperatur überschreitet, steuert die Steuereinrichtung 20 das Ventil 32 in eine Offenstellung. Insbesondere steuert die Steuereinrichtung 20 den Strömungsquerschnitt des Ventils 32 in Abhängigkeit der von der Erfassungseinrichtung 18, erfassten Signale derart, dass die Temperatur der die Prozessluftzufuhrleitung 12 durchströmenden Prozessluft durch die Zufuhr kühlerer Prozessluft aus der Prozessluftleitung 26 unter den zulässigen Maximalwert gesenkt wird. Da die die Prozessluftleitung 26 stromabwärts des Kompressors 16 durchströmende Prozessluft aufgrund der Verdichtung der Prozessluft in dem Kompressor 16 einen höheren Druck aufweist als die die Prozessluftzufuhrleitung 12 durchströmende Prozessluft, kann auf eine Fördereinrichtung zur Förderung der die Prozessluftleitung 26 durchströmenden Prozessluft durch die Verbindungsleitung 30 in die Prozessluftzufuhrleitung 12 verzichtet werden.

Wenn die Steuereinrichtung 20 anhand der ihr von der Erfassungseinrichtung 18 übermittelten Signale feststellt, dass die Zufuhr von die Prozessluftleitung 26 durchströmender Prozessluft in die Prozessluftzufuhrleitung 12 nicht ausreicht, um die Temperatur der die Prozessluftzufuhrleitung 12 durchströmenden Prozessluft unter den vorgegebenen Maximalwert zu senken, kann die Steuereinrichtung 20 auch den Betrieb der Kühleinrichtung 28 derart steuern, dass die Kühlleistung der Kühleinrichtung 28 erhöht. Eine Steuerung des Betriebs der Kühleinrichtung 28 durch die Steuereinrichtung 20 ist auch möglich, wenn die Steuereinrichtung 20 erkennt, dass zur Senkung der Temperatur der die Prozessluftzufuhrleitung 12 durchströmenden Prozessluft unter den vorgegebenen Maximalwert die Abzweigung eines zu großen Prozessluftvolumenstroms aus der Prozessluftleitung 26 erforderlich ist. Grundsätzlich wird der Steuerung der aus der Prozessluftleitung 26 abgezweigten Prozessluftströmung jedoch die Priorität vor der Steuerung des Betriebs der Kühleinrichtung 28 eingeräumt.

Durch die entsprechende Steuerung der aus der Prozessluftleitung 26 abgezweigten Prozessluftströmung und/oder die entsprechende Steuerung des Betriebs der Kühleinrichtung 28 durch die Steuereinrichtung 20 wird zuverlässig unterbunden, dass sich die Temperatur der Prozessluft bei der Verdichtung im Kompressor 16 bei einer vorgegebenen Verdichtungsleistung des Kompressors 16 über einen vorgegebenen Maximalwert von ca. 220°C bis 260°C erwärmt. Dadurch werden Beschädigungen des Kompressors 16 und/oder stromabwärts des Kompressors 16 angeordneter Komponenten der Kompressor/Turbinen-Anordnung 10 durch zu hohe Prozesslufttemperaturen verhindert. Folglich können die Kompressor/Turbinen-Anordnung 10 und ein mit der Kompressor/Turbinen-Anordnung 10 ausgestattetes Klimaaggregat 200 auch dann weiter betrieben werden, wenn beispielsweise beim Start des Flugzeugs oder in einem Fehlerfall die der Prozessluftzufuhrleitung 12 von der Prozessluftquelle 14 zugeführte Prozessluft eine Temperatur aufweist, die oberhalb des zulässigen Maximaltemperaturwerts für die dem Kompressor 16 zuzuführende Prozessluft liegt.

Wenn die Steuereinrichtung 20 feststellt, dass die Temperatur der der Prozessluftzufuhrleitung 12 von der Prozessluftquelle 14 zugeführten Prozessluft vor dem Eintritt der Prozessluft in den Kompressor 16 durch die Zufuhr von kühlerer Prozessluft aus der Verbindungsleitung 30 nicht unter den vorgegebenen Maximalwert von 220°C gesenkt werden kann, steuert die Steuereinrichtung 20 den Betrieb des Kompressors 16 derart, dass die Verdichtungsleistung des Kompressors 16 verringert und folglich die Erwärmung der Prozessluft beim Durchströmen des Kompressors 16 reduziert wird. Bei gleichbleibender Kühlleistung der Kühleinrichtung 28 steht somit stromabwärts der Kühleinrichtung 28 kühlere Luft zur Verfügung, die über die Verbindungsleitung 30 in die Prozessluftzufuhrleitung 12 geleitet werden kann. Erst wenn auch durch eine Verringerung der Verdichtungsleistung des Kompressors 16 die Temperatur der die Prozessluftleitung 26 durchströmenden Prozessluft nicht ausreichend verringert werden kann, um die Temperatur der die Prozessluftzufuhrleitung 12 durchströmenden Prozessluft unter den zulässigen Maximalwert von 220°C abzusenken, wird die Kompressor/Turbinen-Anordnung 10 von der Steuereinrichtung 20 abgeschaltet, um Beschädigungen des Kompressors 16 sowie stromabwärts des Kompressors 60 angeordneter Komponenten der Kompressor/Turbinen-Anordnung 10 durch zu heiße Prozessluft zu verhindern.

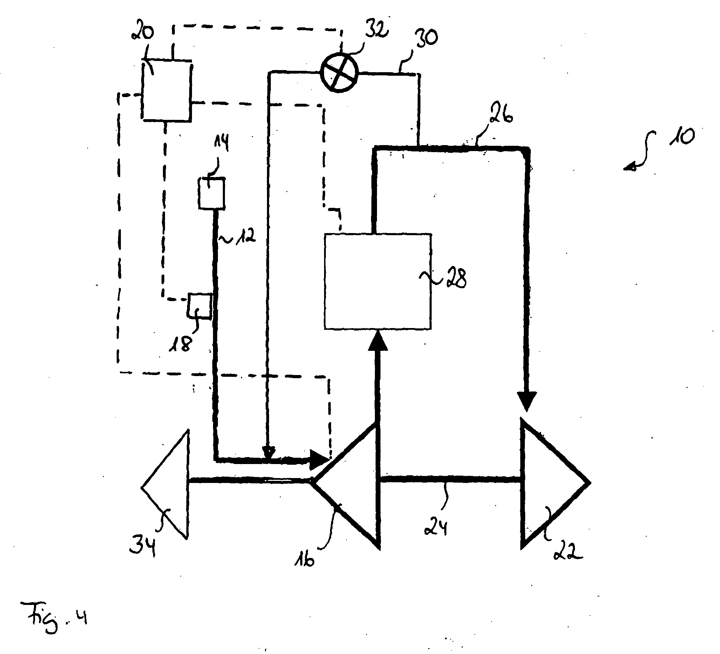

Eine in Figur 4 gezeigte Ausführungsform der Kompressor/Turbinen-Anordnung 10 unterscheidet sich von der Anordnung gemäß Figur 3 dadurch, dass ein Gebläse 34 mit dem Kompressor 16 und der Turbine 22 auf der gemeinsamen Welle 24 angeordnet ist. Im Übrigen entsprechen der Aufbau und die Funktionsweise der Kompressor/Turbinen-Anordnung 10 gemäß Figur 4 dem Aufbau und der Funktionsweise der Kompressor/Turbinen-Anordnung aus Figur 3.

Wie aus Figur 9 ersichtlich wird, dient das Gebläse 34 dazu, im Bodenbetrieb des Flugzeugs Umgebungsluft durch einen Stauluftkanal 36 des mit der Kompressor/Turbinen-Anordnung 10 ausgestatteten Klimaaggregats 200 zu fördern. In einem Einlassbereich 38 sowie einem Auslassbereich 40 des Stauluftkanals 36 sind jeweils Klappen 42, 44 zur Steuerung der Umgebungsluftströmung durch den Stauluftkanal 36 vorgesehen. In dem Klimaaggregat 200 gemäß Figur 9 wird die Kühleinrichtung 28 durch einen in dem Stauluftkanal 36 angeordneten Wärmetauscher 46 sowie einen stromabwärts des Wärmetauschers 46 angeordneten weiteren Wärmetauscher 48 gebildet. Der Wärmetauscher 46 des in Figur 9 gezeigten Klimaaggregats 200 entspricht hinsichtlich seines Aufbaus und seiner Funktion dem zweiten Wärmetauscher 112 in dem aus dem Stand der Technik bekannten und in Figur 2 gezeigten Klimaaggregat 100. In ähnlicher Weise entspricht der weitere Wärmetauscher 48 des Klimaaggregats 200 gemäß Figur 9 hinsichtlich seines Aufbaus und seiner Funktion dem dritten Wärmetauscher 116 des aus dem Stand der Technik bekannten und in Figur 2 veranschaulichten Klimaaggregats 100. Ferner umfasst das Klimaaggregat 200 ein dem Ventil 104 in dem bekannten Klimaaggregat 100 gemäß Figur 2 entsprechendes Ventil 49 zur Steuerung der Prozessluftzufuhr von der Prozessluftquelle 14 in die Prozessluftzufuhrleitung 12 sowie einen dem vierten Wärmetauscher 118 des Klimaaggregats 100 gemäß Figur 2 entsprechenden dritten Wärmetauscher 50.

Da die Prozessluft, die dem Kompressor 16 in dem Klimaaggregat 200 gemäß Figur 9 von der Prozessluftquelle 14 zugeführt wird, einen geringeren Druck aufweist als die dem Kompressor 108 in dem aus dem Stand der Technik bekannten und in Figur 2 dargestellten Klimaaggregat 100 zugeführte Prozessluft, ist das Klimaaggregat 200 mit einem in Form eines Elektromotors ausgebildeten Motor 51 versehen. Der Motor 51 ist mit dem Gebläse 34, dem Kompressor 16 und der Turbine 22 auf der gemeinsamen Welle 24 angeordnet und dient dazu, den Kompressor 16 und das Gebläse 34 mit ausreichend Antriebsenergie zu versorgen, wenn die von der Turbine 22 bereitgestellte Antriebsleistung aufgrund des zu geringen Prozessluftdrucks nicht ausreichend ist.

In dem in Figur 9 gezeigten Ausführungsbeispiel eines Klimaaggregats 200 ist der Motor 51 zwischen dem Kompressor 16 und der Turbine 22 angeordnet. Alternativ dazu sind jedoch auch Konfigurationen denkbar, in denen der Motor 51 rechts der Turbine 22 oder links des Kompressors 16, entweder zwischen dem Gebläse 34 und dem Kompressor 16 oder links des Gebläses 34 auf der Welle 24 angeordnet ist. Ferner sind Konfigurationen denkbar, in denen der Motor 51 lediglich den Kompressor oder das Gebläse 34 antreibt.

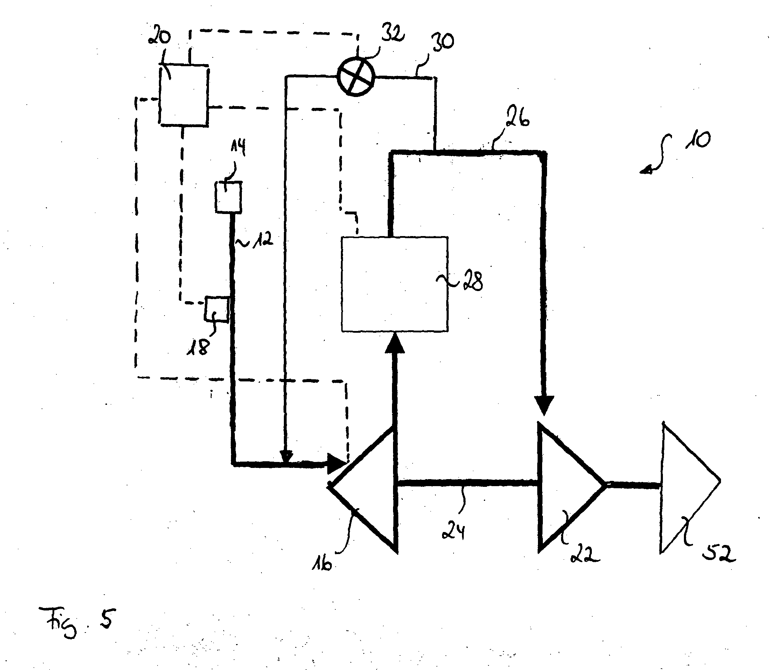

Die in Figur 5 veranschaulichte Ausführungsform einer Kompressor/Turbinen-Anordnung 10 unterscheidet sich von der Anordnung gemäß Figur 3 dadurch, dass die Kompressor/Turbinen-Anordnung 10 eine weitere Turbine 52 umfasst. Die weitere Turbine 52 ist mit dem Kompressor 16 und der Turbine 22 auf der gemeinsamen Welle 24 angeordnet. Im Übrigen entsprechen der Aufbau und die Funktionsweise der Kompressor/Turbinen-Anordnung 10 gemäß Figur 5 dem Aufbau und der Funktionsweise der Kompressor/Turbinen-Anordnung aus Figur 3.

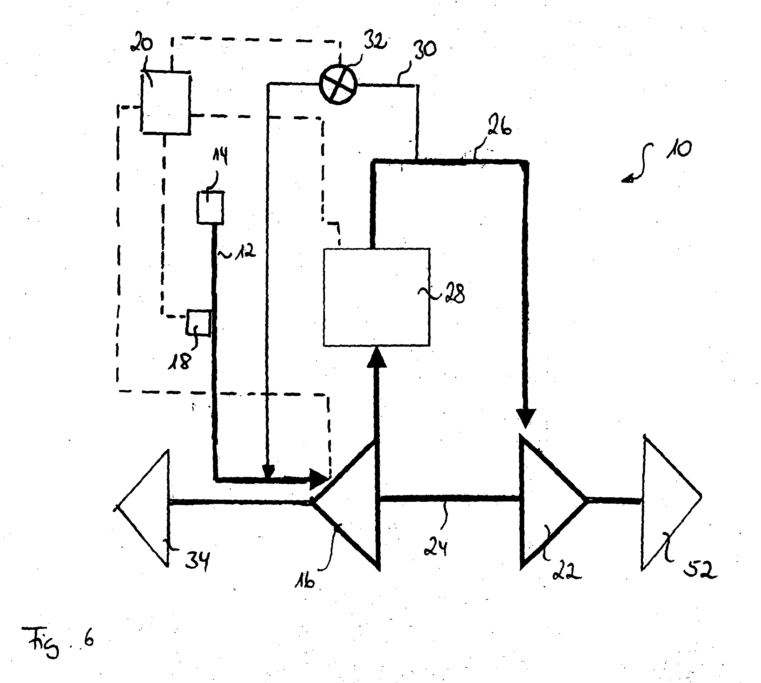

Die in Figur 6 gezeigte Kompressor/Turbinen-Anordnung 10 unterscheidet sich von der Anordnung gemäß Figur 4 dadurch, dass die Kompressor/Turbinen-Anordnung 10 eine weitere Turbine 52 umfasst. Die weitere Turbine 52 ist mit dem Gebläse 34, dem Kompressor 16 und der Turbine 22 auf der gemeinsamen Welle 24 angeordnet. Im Übrigen entsprechen der Aufbau und die Funktionsweise der Kompressor/Turbinen-Anordnung 10 gemäß Figur 6 dem Aufbau und der Funktionsweise der in Figur 4 dargestellten Anordnung.

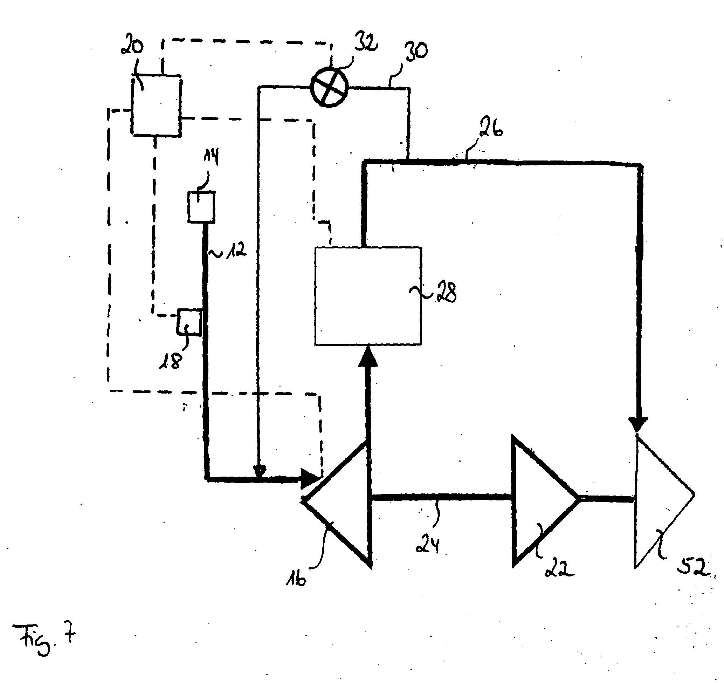

Die in Figur 7 veranschaulichte Kompressor/Turbinen-Anordnung 10 unterscheidet sich von der Anordnung gemäß Figur 5 lediglich dadurch, dass die Prozessluftleitung 26 den Kompressor 16 nicht länger mit der Turbine 22, sondern der weiteren Turbine 52 verbindet. Im Übrigen entsprechen der Aufbau und die Funktionsweise der Kompressor/Turbinen-Anordnung 10 gemäß Figur 7 dem Aufbau und der Funktionsweise der Anordnung aus Figur 5.

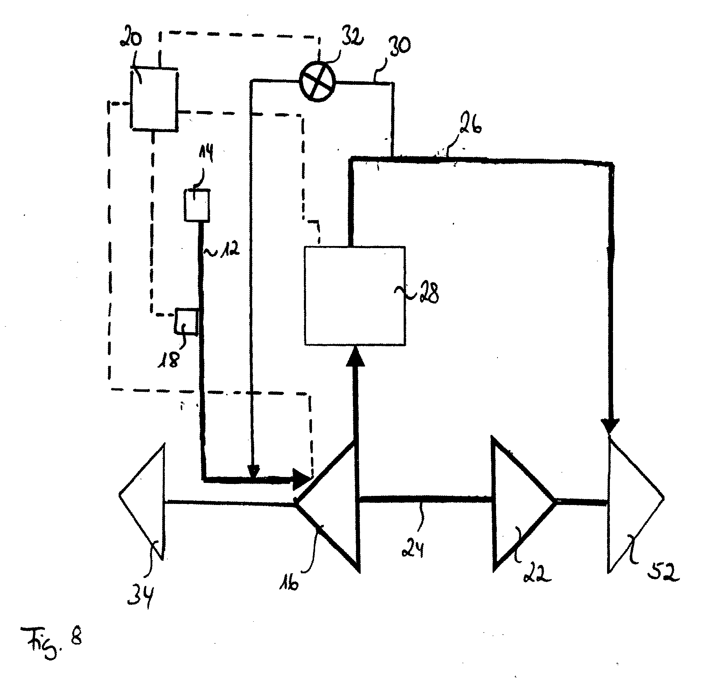

Die Kompressor/Turbinen-Anordnung 10 gemäß Figur 8 unterscheidet sich von der in Figur 6 veranschaulichten Anordnung lediglich dadurch, dass die Prozessluftleitung 26 den Kompressor 16 nicht mit der Turbine 22, sondern der weiteren Turbine 52 verbindet. Im Übrigen entsprechen der Aufbau und die Funktionsweise der Kompressor/Turbinen-Anordnung 10 gemäß Figur 8 dem Aufbau und der Funktionsweise der in Figur 6 dargestellten Anordnung.

Oben im Zusammenhang mit einzelnen Ausführungsförmen der Kompressor/Turbinen-Anordnung 10 oder des Klimaaggregats 200 beschriebene Merkmale können auch mit anderen Ausführungsformen der Kompressor/Turbinen-Anordnung 10 oder des Klimaaggregats. 200 kombiniert werden. Beispielsweise kann das Klimaaggregat 200 mit einer beliebigen Ausführungsform der Kompressor/Turbinen-Anordnung 10 und einem Motor 51 ausgestattet werden. Ferner kann die Kompressor/Turbinen-Anordnurtg 10, je nach Bedarf um weitere Kompressoren und/oder Turbinen ergänzt werden.

## Patentansprüche

1. Kompressor/Turbinen-Anordnung (10) zum Einsatz in einem Klimaaggregat (200) einer Flugzeugklimaanlage, mit:
- einer Prozessluftzufuhrleitung (12), die dazu eingerichtet ist, einem Kompressor (16) von einer Prozessluftquelle (14) erzeugte Prozessluft zuzuführen,
- einer Erfassungseinrichtung (18), die dazu eingerichtet ist, ein für die Temperatur der die Prozessluftzufuhrleitung (12) durchströmenden Prozessluft charakteristisches Signal zu erfassen,
- einer Turbine (22), die dazu eingerichtet ist, den Kompressor (16) anzutreiben,
- einer Kühleinrichtung (28), die in einer den Kompressor (16) mit der Turbine (22) verbindenden Prozessluftleitung (26) angeordnet und dazu eingerichtet ist, die aus dem Kompressor (16) austretende und die Prozessluftleitung (26) in Richtung der Turbine (22) durchströmende Prozessluft zu kühlen,
- einer Verbindungsleitung (30), die stromabwärts der Kühleinrichtung (28) von der Prozessluftleitung (26) abzweigt und in die Prozessluftzufuhrleitung (12) mündet,
**dadurch gekennzeichnet, dass**
die Anordnung weiterhin umfasst:
- eine Steuereinrichtung (20), die dazu eingerichtet ist, eine Prozessluftströmung durch die Verbindungsleitung (30) in Abhängigkeit des von der Erfassungseinrichtung (18) erfassten, für die Temperatur der die Prozessluftzufuhrleitung (12) durchströmenden Prozessluft charakteristischen Signals zu steuern, wobei in die Prozessluftzufuhrleitung keine Kühleinrichtung zwischengeschaltet ist, so dass die die Prozessluftzufufirleitung (12) im Bereich eines mit der Prozessluftquelle (14) verbundenen Endes durchströmende Prozessluft im Wesentlichen die gleiche Temperatur aufweist, wie die die Prozessluftzufuhrleitung (12) im Bereich eines mit dem Kompressor (16) verbundenen Endes durchströmende Prozessluft.

2. Kompressor/Turbinen-Anordnung nach Anspruch 1,
**dadurch gekennzeichnet, dass** die Steuereinrichtung (20) dazu eingerichtet ist, die Prozessluftströmung durch die Verbindungsleitung (30) und/oder den Betrieb der Kühleinrichtung (28) in Abhängigkeit des von der Erfassungseinrichtung (18) erfassten, für die Temperatur der die Prozessluftzufuhrleitung (12) durchströmenden Prozessluft charakteristischen Signals derart zu steuern, dass verhindert wird, dass die Temperatur der die Prozessluftzufuhrleitung (12) durchströmenden Prozessluft einen vorgegebenen Maximalwert überschreitet, und/oder dass die Steuereinrichtung (20) dazu eingerichtet sein, den Betrieb des Kompressors (16) in Abhängigkeit des von der Erfassungseinrichtung (18) erfassten, für die Temperatur der die Prozessluftzufuhrleitung durchströmenden Prozessluft charakteristischen Signals derart zu steuern, dass eine Temperaturerhöhung, die die Prozessluft bei der Verdichtung in dem Kompressor (16) erfährt, einen zulässigen Maximalwert nicht überschreitet.

3. Kompressor/Turbinen-Anordnung nach einem der Ansprüche 1 oder 2,
**dadurch gekennzeichnet, dass** die Steuereinrichtung (20) dazu eingerichtet ist, zur Steuerung der Prozessluftströmung durch die Verbindungsleitung (30) ein in der Verbindungsleitung (30) angeordnetes Ventil (32) zu steuern.

4. Kompressor/Turbinen-Anordnung nach einem der Ansprüche 1 bis 3,
**gekennzeichnet durch** ein Gebläse (34), das dazu eingerichtet ist, von der Turbine (22) der Kompressor/Turbinen-Anordnung (10) angetrieben zu werden.

5. Kompressor/Turbinen-Anordnung nach einem der Ansprüche 1 bis 4,
**gekennzeichnet durch** eine weitere Turbine (52), die dazu eingerichtet ist, den Kompressor (16) und/oder das Gebläse (34) anzutreiben, wobei die Prozessluftleitung (26) den Kompressor (16) entweder mit der Turbine (22) oder der weiteren Turbine (52) verbindet.

6. Klimaaggregat (200) für eine Flugzeugklimaanlage,
**gekennzeichnet durch** eine Kompressor/Turbinen-Anordnung (10) nach einem der Ansprüche 1 bis 5.

7. Klimaaggregat nach Anspruch 6,
**gekennzeichnet durch** einen Motor (51), der dazu eingerichtet ist, den Kompressor (16) und/oder das Gebläse (34) der Kompressor/Turbinen-Anordnung (10) anzutreiben.

8. Verfahren zum Betreiben einer zum Einsatz in einem Klimaaggregat (200) einer Flugzeugklimaanlage vorgesehenen Kompressor/Turbinen-Anordnung (10), mit den Schritten:
- Zuführen von durch eine Prozessluftquelle (14) erzeugter Prozessluft zu einem Kompressor (16) durch eine Prozessluftzufuhrleitung (12), in der keine Kühleinrichtung vorgesehen ist,
- Erfassen eines für die Temperatur der die Prozessluftzufuhrleitung (12) durchströmenden Prozessluft charakteristischen Signals,
- Kühlen der aus dem Kompressor (16) austretenden Prozessluft mittels einer Kühleinrichtung (28), die in einer den Kompressor (16) mit einer Turbine (22) verbindenden Prozessluftleitung (26) angeordnet ist, wobei die Turbine (22) dazu eingerichtet ist, den Kompressor (16) anzutreiben,
- Zuführen der gekühlten Prozessluft zu der Turbine (22),
- Steuern einer Prozessluftströmung durch eine stromabwärts der Kühleinrichtung (28) von der Prozessluftleitung (26) abzweigende und in die Prozessluftzufuhrleitung (12) mündende Verbindungsleitung (30) in Abhängigkeit des erfassten, für die Temperatur der die Prozessluftzufuhrleitung (12) durchströmenden Prozessluft charakteristischen Signals, wobei die die Prozessluftzufuhrleitung (12) im Bereich eines mit der Prozessluftquelle (14) verbundenen Endes durchströmende Prozessluft im Wesentlichen die gleiche Temperatur aufweist, wie die die Prozessluftzufuhrleitung (12) im Bereich eines mit dem Kompressor (16) verbundenen Endes durchströmende Prozessluft.

9. Verfahren nach Anspruch 8,
**dadurch gekennzeichnet, dass** die Prozessluftströmung durch die Verbindungsleitung (30) und/oder der Betrieb der Kühleinrichtung (28) in Abhängigkeit des erfassten, für die Temperatur der die Prozessluftzufuhrleitung (12) durchströmenden Prozessluft charakteristischen Signals derart gesteuert wird/werden, dass verhindert wird, dass die Temperatur der die Prozessluftzufuhrleitung (12) durchströmenden Prozessluft einen vorgegebenen Maximalwert überschreitet, und/oder dass der Betrieb des Kompressors (16) in Abhängigkeit des von der Erfassungseinrichtung (18) erfassten, für die Temperatur der die Prozessluftzufuhrleitung durchströmenden Prozessluft charakteristischen Signals derart gesteuert wird, dass eine Temperaturerhöhung, die die Prozessluft bei der Verdichtung in dem Kompressor (16) erfährt, einen zulässigen Maximalwert nicht überschreitet.

10. Verfahren nach einem der Ansprüche 8 bis 9,
**dadurch gekennzeichnet, dass** die Prozessluftströmung durch die Verbindungsleitung (30) durch die Steuerung eines in der Verbindungsleitung (30) angeordneten Ventils (32) gesteuert wird.

11. Verfahren nach einem der Ansprüche 8 bis 10,
**dadurch gekennzeichnet, dass** ein Gebläse (34) von der Turbine (22) der Kompressor/Turbinen-Anordnung (10) angetrieben wird.

12. Verfahren nach einem der Ansprüche 8 bis 11,
**dadurch gekennzeichnet, dass** eine weitere Turbine (52) den Kompressor (16) und/oder das Gebläse (34) antreibt, wobei die Prozessluftleitung (26) den Kompressor (16) entweder mit der Turbine (22) oder der weiteren Turbine (52) verbindet.

## Claims

1. Compressor/turbine arrangement (10) for use in an air conditioning unit (200) of an aircraft air conditioning system, having:
- a process air supply line (12) which is designed to supply process air generated by a process air source (14) to a compressor (16),
- a detection device (18) which is designed to detect a signal characteristic of the temperature of the process air flowing through the process air supply line (12),
- a turbine (22) which is designed to drive the compressor (16),
- a cooling device (28) which is arranged in a process air line (26) connecting the compressor (16) to the turbine (22) and is designed to cool the process air exiting the compressor (16) and flowing through the process air line (26) in the direction of the turbine (22),
- a connecting line (30) which branches off from the process air line (26) downstream of the cooling device (28) and opens into the process air supply line (12),
**characterised in that**
the arrangement further comprises:
- a control device (20) which is designed to control a process air flow through the connecting line (30) in dependence on the signal detected by the detection device (18) and characteristic of the temperature of the process air flowing through the process air supply line (12), there being no cooling device interposed in the process air supply line (12), so that the process air flowing through the process air supply line (12) in the region of an end connected to the process air source (14) has substantially the same temperature as the process air flowing through the process air supply line (12) in the region of an end connected to the compressor (16).

2. Compressor/turbine arrangement according to Claim 1,
**characterised in that** the control device (20) is designed to control the process air flow through the connecting line (30) and/or the operation of the cooling device (28) in dependence on the signal detected by the detection device (18) and characteristic of the temperature of the process air flowing through the process air supply line (12) in such a manner as to prevent the temperature of the process air flowing through the process air supply line (12) from exceeding a predetermined maximum value, and/or **in that** the control device (20) is designed to control the operation of the compressor (16) in dependence on the signal detected by the detection device (18) and characteristic of the temperature of the process air flowing through the process air supply line, in such a manner that a temperature increase which the process air undergoes on compression in the compressor (16) does not exceed a permissible maximum value.

3. Compressor/turbine arrangement according to one of Claims 1 or 2, **characterised in that** the control device (20) is designed, for controlling the process air flow through the connecting line (30), to control a valve (32) arranged in the connecting line (30).

4. Compressor/turbine arrangement according to one of Claims 1 to 3, **characterised by** a fan (34) which is designed to be driven by the turbine (22) of the compressor/turbine arrangement (10).

5. Compressor/turbine arrangement according to one of Claims 1 to 4, **characterised by** a further turbine (52) which is designed to drive the compressor (16) and/or the fan (34), the process air line (26) connecting the compressor (16) either to the turbine (22) or to the further turbine (52).

6. Air conditioning unit (200) for an aircraft air conditioning system, **characterised by** a compressor/turbine arrangement (10) according to one of Claims 1 to 5.

7. Air conditioning unit according to Claim 6,
**characterised by** a motor (51) which is designed to drive the compressor (16) and/or the fan (34) of the compressor/turbine arrangement (10).

8. Method for operating a compressor/turbine arrangement (10) provided for use in an air conditioning unit (200) of an aircraft air conditioning system, having the steps:
- supplying process air, generated by a process air source (14), to a compressor (16) through a process air supply line (12) in which no cooling device is provided,
- detecting a signal characteristic of the temperature of the process air flowing through the process air supply line (12),
- cooling the process air exiting the compressor (16) by means of a cooling device (28) which is arranged in a process air line (26) connecting the compressor (16) to a turbine (22), the turbine (22) being designed to drive the compressor (16),
- supplying the cooled process air to the turbine (22),
- controlling a process air flow through a connecting line (30), branching off from the process air line (26) downstream of the cooling device (28) and opening into the process air supply line (12) in dependence on the detected signal characteristic of the temperature of the process air flowing through the process air supply line (12), the process air flowing through the process air supply line (12) in the region of an end connected to the process air source (14) having substantially the same temperature as the process air flowing through the process air supply line (12) in the region of an end connected to the compressor (16).

9. Method according to Claim 8,
**characterised in that** the process air flow through the connecting line (30) and/or the operation of the cooling device (28) is/are controlled in dependence on the detected signal characteristic of the temperature of the process air flowing through the process air supply line (12) in such a manner as to prevent the temperature of the process air flowing through the process air supply line (12) from exceeding a predetermined maximum value, and/or **in that** the operation of the compressor (16) is controlled in dependence on the signal detected by the detection device (18) and characteristic of the temperature of the process air flowing through the process air supply line, in such a manner that a temperature increase which the process air undergoes on compression in the compressor (16) does not exceed a permissible maximum value.

10. Method according to one of Claims 8 to 9,
**characterised in that** the process air flow through the connecting line (30) is controlled by the control of a valve (32) arranged in the connecting line (30).

11. Method according to one of Claims 8 to 10,
**characterised in that** a fan (34) is driven by the turbine (22) of the compressor/turbine arrangement (10).

12. Method according to one of Claims 8 to 11,
**characterised in that** a further turbine (52) drives the compressor (16) and/or the fan (34), the process air line (26) connecting the compressor (16) either to the turbine (22) or to the further turbine (52).

## Revendications

1. Agencement de compresseur/turbine (10) destiné à être utilisé dans un groupe climatiseur (200) d'une installation de climatisation d'avion, comprenant :
- une conduite d'amenée d'air de processus (12) qui est conçue pour amener à un compresseur (16) de l'air de processus généré par une source d'air de processus (14),
- un dispositif de détection (18) qui est conçu pour détecter un signal caractéristique de la température de l'air de processus traversant ladite conduite d'amenée d'air de processus (12),
- une turbine (22) qui est conçue pour entraîner le compresseur (16),
- un dispositif de refroidissement (28) qui est disposé dans une conduite d'air de processus (26) reliant ledit compresseur (16) à ladite turbine (22) et conçu pour refroidir l'air de processus sortant du compresseur (16) et traversant la conduite d'air de processus (26) en direction de la turbine (22),
- une conduite de raccordement (30) qui part de la conduite d'air de processus (26) en aval dudit dispositif de refroidissement (28) et débouche dans la conduite d'amenée d'air de processus (12),
**caractérisé en ce que** l'agencement comprend en outre :
- un dispositif de commande (20) qui est conçu pour contrôler un écoulement d'air de processus à travers ladite conduite de raccordement (30) en fonction du signal caractéristique de la température de l'air de processus traversant la conduite d'amenée d'air de processus (12) détecté par ledit dispositif de détection (18), aucun dispositif de refroidissement n'étant disposé dans la conduite d'amenée d'air de processus de sorte que l'air de processus traversant la conduite d'amenée d'air de processus (12) dans la zone d'une extrémité reliée à la source d'air de processus (14) présente sensiblement la même température que l'air de processus traversant la conduite d'amenée d'air de processus (12) dans la zone d'une extrémité reliée au compresseur (16).

2. Agencement de compresseur/turbine selon la revendication 1,
**caractérisé en ce que** le dispositif de commande (20) est conçu pour commander l'écoulement d'air de processus à travers la conduite de raccordement (30) et/ou le fonctionnement du dispositif de refroidissement (28) en fonction du signal caractéristique de la température de l'air de processus traversant la conduite d'amenée d'air de processus (12) de manière à éviter que la température de l'air de processus s'écoulant à travers la conduite d'amenée d'air de processus (12) n'excède une valeur maximale prédéterminée, et/ou que le dispositif de commande (20) est conçu pour commander le fonctionnement du compresseur (16) en fonction du signal caractéristique de la température de l'air de processus traversant la conduite d'amenée d'air de processus (12) détecté par le dispositif de détection (18) de sorte que l'augmentation de la température à laquelle l'air de processus est soumis lors de sa compression dans le compresseur (16) n'excède pas une valeur maximale admissible.

3. Agencement de compresseur/turbine selon l'une des revendications 1 ou 2,
**caractérisé en ce que** le dispositif de commande (20) est conçu pour commander une soupape (32) disposée dans la conduite de raccordement (30) afin de contrôler l'écoulement d'air de processus à travers la conduite de raccordement (30).

4. Agencement de compresseur/turbine selon l'une des revendications 1 à 3,
**caractérisé par** une soufflante (34) qui est conçue pour être entraînée par la turbine (22) de l'agencement de compresseur/turbine (10).

5. Agencement de compresseur/turbine selon l'une des revendications 1 à 4,
**caractérisé par** une turbine supplémentaire (52) qui est conçue pour entraîner le compresseur (16) et/ou la soufflante (34), la conduite d'air de processus (26) reliant le compresseur (16) soit à la turbine (22) soit à la turbine supplémentaire (52).

6. Groupe climatiseur (600) pour une installation de climatisation d'avion
**caractérisé par** un agencement de compresseur/turbine (10) selon l'une des revendications 1 à 5.

7. Groupe de climatisation selon la revendication 7
**caractérisé par** un moteur (51) qui est conçu pour entraîner le compresseur (16) et/ou la soufflante (34) de l'agencement de compresseur/turbine (10).

8. Procédé pour faire fonctionner un agencement de compresseur/turbine (10) destiné à être utilisé dans un groupe climatiseur (200) d'une installation de climatisation d'avion, comportant les étapes suivantes :
- l'amenée d'air de processus généré par une source d'air de processus (14) à un compresseur (16) à travers une conduite d'air de processus (12) à l'intérieur de laquelle n'est disposé aucun dispositif de refroidissement,
- la détection d'un signal caractéristique de la température de l'air de processus traversant la conduite d'air de processus (12),
- le refroidissement de l'air de processus sortant du compresseur (16) au moyen d'un dispositif de refroidissement (28) qui est disposé dans une conduite d'air de processus (26) reliant le compresseur (16) à une turbine (22), la turbine (22) étant conçue pour entraîner le compresseur (16),
- l'amenée de l'air de processus refroidi à la turbine (22),
- la commande d'un écoulement d'air de processus à travers une conduite de raccordement (30) partant de la conduite d'air de processus (26) en aval du dispositif de refroidissement et débouchant dans la conduite d'amenée d'air de processus (12) en fonction du signal caractéristique de la température de l'air de processus traversant la conduite d'amenée d'air de processus (12) détecté, l'air de processus traversant la conduite d'amenée d'air de processus (12) dans la zone d'une extrémité reliée à la source d'air de processus (14) présente sensiblement la même température que l'air de processus traversant la conduite d'amenée d'air de processus (12) dans la zone d'une extrémité reliée au compresseur (16).

9. Procédé selon la revendication 8,
**caractérisé en ce que** l'écoulement d'air de processus à travers la conduite de raccordement (30) et/ou le fonctionnement du dispositif de refroidissement (28) est/sont commandé(s) en fonction du signal caractéristique de la température de l'air de processus traversant la conduite d'amenée d'air de processus (12) détecté par le dispositif de détection (18) de sorte à éviter que la température de l'air de processus s'écoulant à travers la conduite d'amenée d'air de processus (12) n'excède une valeur maximale prédéfinie, et/ou que le fonctionnement du compresseur (16) est commandé en fonction du signal caractéristique de la température de l'air de processus traversant la conduite d'amenée d'air de processus (12) détecté par le dispositif de détection (18) de sorte que toute augmentation de la température à laquelle l'air de processus est soumis lors de sa compression dans le compresseur (16) n'excède pas une valeur maximale admissible.

10. Procédé selon l'une des revendications 8 à 9,
**caractérisé en ce que** l'écoulement d'air de processus à travers la conduite de raccordement (30) est contrôlé par la commande d'une soupape disposée dans la conduite de raccordement (30).

11. Procédé selon l'une des revendications 8 à 10,
**caractérisé en ce qu'**une soufflante (34) est entraînée par la turbine (22) de l'agencement de compresseur/turbine (10).

12. Procédé selon l'une des revendications 8 à 11,
**caractérisé en ce qu'**une turbine supplémentaire (52) entraîne le compresseur (16) et/ou la soufflante (34), la conduite d'air de processus (26) reliant le compresseur (16) soit à la turbine (22) soit à la turbine supplémentaire (52).
